(19) Europäisches Patentamt
European Patent Office
Office européen des brevets

(11) **EP 1 668 794 B1**

(12) **FASCICULE DE BREVET EUROPEEN**

(45) Date de publication et mention
de la délivrance du brevet:
**15.08.2018 Bulletin 2018/33**

(21) Numéro de dépôt: **04787466.4**

(22) Date de dépôt: **27.09.2004**

(51) Int Cl.:
*H04B 7/06* (2006.01)　　*H04L 1/06* (2006.01)

(86) Numéro de dépôt international:
**PCT/FR2004/002444**

(87) Numéro de publication internationale:
**WO 2005/034386 (14.04.2005 Gazette 2005/15)**

(54) **PROCEDE D'EMISSION MULTI-ANTENNES D'UN SIGNAL PAR CODES ESPACE-TEMPS EN BLOC**

VERFAHREN ZUR MEHRANTENNENEMISSION EINES RAUM-ZEIT-BLOCK-KODIERTEN SIGNALES

METHOD FOR A MULTI-ANTENNA TRANSMISSION OF A SPACE-TIME BLOCK CODED SIGNAL

(84) Etats contractants désignés:
**AT BE BG CH CY CZ DE DK EE ES FI FR GB GR HU IE IT LI LU MC NL PL PT RO SE SI SK TR**

(30) Priorité: **03.10.2003 FR 0311647**

(43) Date de publication de la demande:
**14.06.2006 Bulletin 2006/24**

(73) Titulaire: **3G Licensing S.A.**
**2132 Luxembourg (LU)**

(72) Inventeurs:
• **LE NIR, Vincent**
**F-61100 Flers (FR)**
• **HELARD, Maryline**
**F-35700 Rennes (FR)**

(74) Mandataire: **Camolese, Marco et al**
**Metroconsult S.r.l.**
**Via Sestriere 100**
**10060 None (TO) (IT)**

(56) Documents cités:
**EP-A- 1 009 124　　EP-A2- 1 073 212**
**DE-A- 10 115 261　　US-A1- 2002 163 892**

## Description

### 1. Domaine de l'invention

Le domaine de l'invention est celui des communications numériques sans fil. Plus précisément, l'invention concerne l'émission/réception d'un signal mettant en oeuvre un nouveau type de code espace-temps en bloc dans le cadre d'un système multi-antennes de type MIMO (« Multiple Input Multiple Output » pour « Entrées Multiples Sorties Multiples ») ou MISO (« Multiple Input Single Output » pour « Entrées Multiples Sortie Unique»).

L'invention s'applique ainsi particulièrement aux systèmes de transmission mettant en oeuvre une pluralité d'antennes (au moins deux) à l'émission et/ou à la réception. L'invention est donc bien adaptée aux récepteurs pour codes espace-temps non-orthogonaux à Nt antennes d'émission et Nr antennes de réception.

L'invention trouve des applications dans le domaine des radiocommunications, notamment pour les systèmes de troisième, quatrième générations et suivantes.

### 2. Solutions de l'art antérieur

On connaît déjà plusieurs systèmes d'émission/réception comprenant plusieurs antennes d'émission et utilisant des codes espace-temps. Les premiers systèmes proposés utilisaient tous des codes espace-temps en blocs orthogonaux.

Ainsi, Alamouti, dans "A Simple Transmit Diversity Technique for Wireless Communications", IEEE J. Sel. Areas Comm., 1998, 16, (8), pp. 1451-1458, a présenté le premier système utilisant un code espace-temps en blocs orthogonal à rendement de 1 (où le rendement est défini comme le rapport entre le nombre N de symboles émis et le nombre L de temps symboles pendant lequel ils sont émis), pour deux antennes d'émission.

Tarokh et al. ("Space-time block codes from orthogonal designs", IEEE Trans. on Information Theory, 1999, 45, (5), pp. 1456-1467) ont ensuite généralisé les codes espace-temps en blocs orthogonaux aux systèmes comprenant trois ou quatre antennes d'émission. Cependant, les rendements R=N/L obtenus n'étaient que de 1/2 ou 3/4.

Les travaux suivants ont conduit à envisager l'utilisation de codes espace-temps en blocs non-orthogonaux. Ainsi Jafarkhani ("A quasi-Orthogonal Space-Time Block Code", IEEE Trans. Comm., 2001, 49, (1), pp1-4) et Tirkonnen et al. ("Minimal non-orthogonality rate one space-time block code for 3+ Tx antennas", ISSSTA, 2000, pp 429-432) ont trouvé des codes espace-temps en blocs non orthogonaux pour un système de quatre antennes, présentant un rendement de 1.

Par la suite, Damen et al. ("Diagonal Algebraic Space-Time Block Codes", IEEE Trans. Inf. Theory, 2002, 48, (3), pp 628-626) ont envisagé d'utiliser des codes espace-temps non-orthogonaux, basés sur une construction d'Hadamard et d'autres rotations avec un nombre d'antennes d'émission égal à la taille de la matrice de code.

Xin et al., dans "Time Constellation-Rotating Codes Maximizing Diversity and Coding Gains", GLOBECOM, San Antonio, 2001, pp 455-459, ont ensuite présenté d'autres codes espace-temps basés sur des rotations.

Il est également connu du document EP 1 009 124 (LUCENT TECHNOLOGIES INC)une technique de transmission sans fil pour des réseaux d'antennes utilisant des signaux espace-temps unitaires. Une telle technique permet de créer une constellation de matrices de signaux, à partir d'un signal initial se présentant sous la forme d'une matrice initiale complexe orthonormale, et d'une pluralité de matrices telles que chaque matrice générée est issue d'au moins une multiplication de la matrice initiale avec au moins une matrice unitaire.

### 3. Inconvénients de l'art antérieur

Un inconvénient des codes espace-temps orthogonaux d'Alamouti ou Tarokh est qu'ils nécessitent que les canaux soient constants sur une durée L, correspondant au nombre de temps-symboles pendant lequel les symboles sont émis.

De tels codes imposent donc de fortes contraintes sur le système d'émission/réception, et ne permettent pas d'exploiter la diversité du canal.

Un inconvénient des codes espace-temps non-orthgonaux, proposés par Jafarkhani, Tirkonnen, Damen ou Xin est qu'ils nécessitent que le canal soit constant sur une durée L=Nt, où Nt est le nombre d'antennes à l'émission. Ceci est particulièrement vrai pour les codes de Damen et de Xin.

En d'autres termes, un inconvénient majeur de tous les codes espace-temps proposés dans la littérature est qu'ils imposent de se placer dans le cas d'un canal quasi-statique, ce qui est particulièrement restrictif, et ne permet pas d'exploiter la diversité du canal.

En outre, les codes de Jafarkhani et Tirkonnen imposent un décodage à Maximum de Vraisemblance (MV ou ML pour "Maximum Likelihood"), qui présente une complexité s'accroissant de manière exponentielle avec l'ordre de la modulation et la taille du code.

Enfin, un autre inconvénient des codes espace-temps algébrique de Damen, qui reposent sur une construction d'Hadamard, est qu'ils doivent être émis suivant une forme matricielle particulière. Ils ne permettent donc pas de réaliser un choix de codage souple, suivant les variations du canal.

Un autre exemple de système sans fil combinant une transmission en diversité en boucle ouverte et fermée est le document EP 1 073 212.

## 4. Objectifs de l'invention

L'invention a notamment pour objectif de pallier ces inconvénients de l'art antérieur.

Plus précisément, un objectif de l'invention est de fournir une technique d'émission d'un signal mettant en oeuvre des codes espace-temps présentant des performances accrues par rapport aux codes espace-temps de l'art antérieur.

Un autre objectif de l'invention est de mettre en oeuvre une telle technique qui n'impose aucune condition particulière quant à la non-variation du canal sur une durée finie ou un nombre de durées symbole donné.

L'invention a encore pour objectif de fournir une telle technique qui soit adaptée aux systèmes multi-antennes de type MIMO et MISO. Plus particulièrement, l'invention a pour objectif de fournir une telle technique qui permette un rendement de codage constant égal à 1, quel que soit le nombre d'antennes.

L'invention a également pour objectif de mettre en oeuvre une telle technique qui présente des performances en taux d'erreur binaire obtenues à haut rapport signal à bruit supérieures à celles des techniques de l'art antérieur.

Encore un objectif de l'invention est de fournir une telle technique qui soit facilement adaptable à différentes configurations, telles qu'à une augmentation du nombre d'antennes ou de la taille du code utilisé.

Un autre objectif de l'invention est de mettre en oeuvre une telle technique qui permette de mieux exploiter la diversité de canal que les techniques de l'art antérieur, et qui permette de réaliser un codage souple.

## 5. Caractéristiques essentielles de l'invention

Ces objectifs, ainsi que d'autres qui apparaîtront par la suite, sont atteints à l'aide d'un procédé d'émission, selon la revendication 1, d'un signal formé de vecteurs successifs comprenant chacun N symboles à émettre, et mettant en oeuvre une pluralité $N_t$ d'antennes d'émission.

Selon l'invention, on associe à chacune desdites antennes une sous-matrice distincte, lesdites sous-matrices étant obtenues par découpage d'une matrice carrée unitaire, et chacune desdites antennes émet des sous-vecteurs, obtenus par découpage desdits vecteurs, multipliés respectivement par lesdites sous-matrices, de façon à former, vu d'un récepteur, un signal combiné unique représentatif de la multiplication desdits vecteurs par ladite matrice unitaire.

Ainsi, l'invention repose sur une approche tout à fait nouvelle et inventive de l'émission d'un signal mettant en oeuvre un code espace-temps dans un système multi-antennes. La technique de l'invention est particulièrement avantageuse puisqu'elle n'impose aucune condition sur le canal : le codage proposé ne nécessite pas, contrairement aux techniques de l'art antérieur, que le canal soit constant sur la durée du code.

La construction particulière des codes espace-temps proposée par l'invention est totalement nouvelle, et repose sur une construction matricielle orthogonale ou unitaire pour chaque antenne. En effet, l'utilisation de ces matrices permet une séparation des signaux émis par chaque antenne.

Selon l'invention, et par rapport aux techniques de l'art antérieur, les contraintes systèmes sont donc moins limitées et la diversité de canal peut être mieux exploitée. Les performances en taux d'erreurs binaires obtenues à haut rapport signal à bruit sont supérieures à celles données par la littérature.

En outre, l'extension du procédé de l'invention a un nombre plus grand d'antennes est très facile, car elle peut être directement obtenue grâce à la matrice orthogonale ou unitaire de base. Quel que soit le nombre d'antennes utilisé, le rendement de codage reste constant.

Avantageusement, un tel procédé d'émission mettant en oeuvre Nt antennes, chacune desdites sous-matrices a une taille de (N/Nt) x N.

Le procédé de l'invention est en effet facilement adaptable à différentes configurations, et notamment à une augmentation du nombre Nt d'antennes. Les différentes matrices de taille (N/Nt) x N sont obtenues à partir d'une matrice principale de taille N x N qu'on découpe en Nt matrices différentes.

Préférentiellement, N/Nt est supérieur ou égal à 2.

De façon avantageuse, ladite matrice unitaire est pleine. En d'autres termes, chacun des éléments de la matrice est non-nul.

De manière préférentielle, ladite matrice unitaire appartient au groupe comprenant :

- les matrices réelles d'Hadamard ;
- les matrices complexes d'Hadamard ;
- les matrices de Fourier ;
- les matrices de rotation réelles ;
- les matrices de rotation complexes.

Ces différentes matrices n'ont pas de rapport les unes avec les autres mais présentent toutes comme caractéristique commune d'être, soit orthogonale s'il s'agit d'une matrice réelle, soit unitaire s'il s'agit d'une matrice complexe.

Selon une première variante avantageuse de l'invention, un tel procédé met en oeuvre deux antennes d'émission, et lesdites sous-matrices valent [1 1] et [1 - 1].

Selon une deuxième variante avantageuse de l'invention, un tel procédé met en oeuvre deux antennes d'émission, et lesdites sous-matrices valent

$$\frac{1}{\sqrt{2}}\begin{bmatrix}1 & 1 & 1 & 1\\ 1 & -1 & 1 & -1\end{bmatrix} \text{ et } \frac{1}{\sqrt{2}}\begin{bmatrix}1 & 1 & -1 & -1\\ 1 & -1 & -1 & 1\end{bmatrix}.$$

Dans ce mode de réalisation préférentiel de l'invention, on utilise donc, pour chaque utilisateur, plusieurs codes ; en d'autres termes, pour chaque utilisateur, chaque sous-matrice a au moins deux lignes.

Selon une troisième variante avantageuse de l'invention, un tel procédé met en oeuvre quatre antennes d'émission, et lesdites sous-matrices valent [1 1 1 1], [1 -1 1 -1], [1 1 -1 -1] et [1 -1 -1 1].

L'invention concerne aussi un procédé de réception, selon la revendication 7, d'un signal émis selon le procédé d'émission décrit précédemment, mettant en oeuvre au moins une antenne de réception, qui reçoit ledit signal combiné unique sur chacune desdites antennes de réception, et qui décode ledit signal combiné unique à l'aide d'une matrice de décodage correspondant à une matrice transposée conjuguée de ladite matrice unitaire.

Préférentiellement, on applique un décodage à maximum de vraisemblance aux données issues de la multiplication par ladite matrice transposée conjuguée.

On peut également utiliser d'autres décodeurs moins complexes, et réaliser ainsi un décodage par sphère ou un décodage par décomposition QR par exemple. On rappelle que toute matrice hermitienne peut en effet être décomposée sous la forme QR, où Q est une matrice unitaire et R une matrice triangulaire supérieure. Une telle décomposition QR présente une complexité en $O^3$, donc moindre que le décodage à maximum de vraisemblance qui présente une complexité en $O^L$.

L'invention concerne encore un signal, selon la revendication 9, émis selon le procédé d'émission décrit précédemment, correspondant à la combinaison des contributions de chacune desdites antennes d'émission, une sous-matrice distincte étant associée à chacune desdites antennes, lesdites sous-matrices étant obtenues par découpage d'une matrice carrée unitaire. Chacune desdites antennes émet des sous-vecteurs, obtenus par découpage desdits vecteurs, multipliés respectivement par lesdites sous-matrices. Un tel signal forme, vu d'un récepteur, un signal combiné unique représentatif de la multiplication desdits vecteurs par ladite matrice unitaire.

L'invention concerne aussi le système d'émission selon la revendication 10, et le récepteur selon la revendication 11.

**6. Liste des figures**

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un organigramme des différentes étapes mises en oeuvre en émission et en réception pour un signal codé au moyen des codes espace-temps de l'invention ;
- la figure 2 illustre un système à deux antennes mettant en oeuvre un code espace-temps de matrice 2x2 selon l'invention ;
- la figure 3 illustre un système à deux antennes similaire à celui de la figure 2 mais qui met en oeuvre un code espace-temps de matrice 4x4 ;
- la figure 4 décrit un système à quatre antennes qui met en oeuvre un code espace-temps de matrice 4x4 ;
- la figure 5 présente les performances comparées des différents codes espace-temps à rendement de 1, de l'art antérieur et de la présente invention, pour deux antennes d'émission et une antenne de réception ;
- la figure 6 illustre les performances comparées des différents codes espace-temps à rendement de 1, de l'art antérieur et de la présente invention, pour quatre antennes d'émission et une antenne de réception.

**7. Description d'un mode de réalisation de l'invention**

Le principe général de l'invention repose sur un nouveau type de code espace-temps pour un système multi-antennes. La construction particulière de ces codes repose sur une construction matricielle orthogonale ou unitaire pour chaque antenne d'émission, l'utilisation de ces matrices permettant une séparation des signaux émis par chaque antenne.

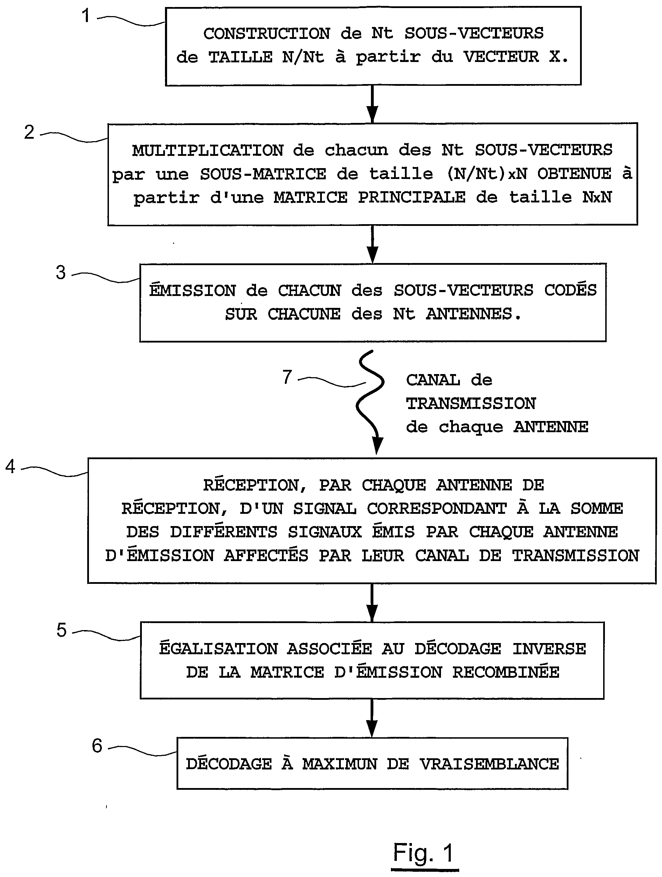

On présente, en relation avec la figure 1, les différentes étapes mises en oeuvre lors de l'émission et de la réception d'un signal selon l'invention.

Au codage, on considère X un vecteur de taille N contenant les N symboles à émettre. On considère également un système comprenant un nombre Nt d'antennes d'émission. La conception des nouveaux codes espace-temps proposés par l'invention est la suivante : Au cours d'une première étape 1, on divise le vecteur X contenant les symboles à émettre en Nt sous-vecteurs de taille N/Nt.

On multiplie ensuite 2 chacun des sous-vecteurs de taille N/Nt par une matrice différente de taille (N/Nt)xN. Ces matrices sont obtenues à partir d'une matrice réelle d'Hadamard, d'une matrice complexe d'Hadamard ou de Fourier, ainsi que de toute matrice de rotation réelle ou complexe. Bien que n'ayant pas de rapport les unes avec les autres, ces différentes matrices ont des caractéristiques communes. En effet, chacune de ces matrices est, soit orthogonale si c'est une matrice réelle, soit unitaire si c'est une matrice complexe.

De plus, chacune de ces matrices doit être pleine, c'est-à-dire que chacun de ses éléments doit être non nul. Ainsi, les différentes matrice de taille (N/Nt)xN sont obtenues à partir d'une matrice principale de taille NxN qu'on coupe en Nt matrices différentes.

On émet ensuite 3 les différents sous-vecteurs codés sur chacune des Nt antennes. Pour chaque temps symbole, chacun des canaux de transmission existant entre les différentes antennes d'émission et de réception affecte 7 le signal transmis.

Le signal reçu par chaque antenne de réception au cours de l'étape référencée 4 correspond à la somme des différents signaux émis par chaque antenne, affectés par leur propre canal à un instant donné.

Au décodage, on effectue une étape d'égalisation 5 associée au décodage inverse de la matrice d'émission re-combinée. Cette matrice est la matrice transposée conjuguée de la matrice d'émission de taille NxN. Les éléments de cette matrice transposée conjuguée sont les filtres d'égalisation des canaux entre les antennes d'émission et de réception pendant la durée du code N.

On effectue alors un décodage 6 à maximum de vraisemblance. Le décodeur utilisé peut également être moins complexe, de façon à réaliser par exemple un décodage par sphère, ou un décodage par décomposition QR. Cette étape de décodage 6 se fait en calculant la distance euclidienne entre le signal reçu au cours de l'étape 4 et tous les signaux que l'on aurait pu transmettre à partir des antennes d'émission. Ainsi, on reforme un signal fictif sans bruit que l'on aurait pu recevoir et on le compare directement au signal reçu réel qui a été bruité lors de son passage 7 dans le canal de transmission. Ce décodage demande donc un effort d'adaptation par rapport au codage effectué et il sera différent pour chaque codeur espace-temps utilisé. Dans le cas du décodage à maximum de vraisemblance, si M correspond à l'alphabet de la modulation et N est la taille de la matrice utilisée, il faut faire une recherche exhaustive du signal émis en faisant $M^N$ comparaisons, ce qui est coûteux en terme de complexité, d'où l'intérêt d'utiliser d'autres méthodes de décodage moins complexes.

Les différentes étapes de l'organigramme de la figure 1 sont illustrées au moyen de l'exemple ci-dessous.

On choisit un vecteur X de taille 10, ainsi qu'un nombre d'antennes Nt=2.

Au cours de l'étape référencée 1, on divise le vecteur X en Nt sous-vecteurs de taille N/Nt, de façon à obtenir 2 sous-vecteurs de taille 5.

Au cours de l'étape référencée 2, on multiplie chacun des sous-vecteurs de taille 5 par une matrice différente. Une matrice connue de taille 10x10 est la matrice de Fourier. On divise cette matrice de taille 10x10 en deux matrices de taille 5x10. On multiplie donc chacun des sous-vecteurs de taille 5 par une des deux matrices 5x10. Après cette opération, les deux sous-vecteurs correspondant aux deux antennes correspondent au code espace-temps utilisé pour l'émission.

Au cours de l'étape référencée 3, on émet les 2 différents sous-vecteurs codés sur chacune des 2 antennes d'émission.

Après propagation via le canal de transmission 7, et réception 4, on effectue au décodage une étape d'égalisation 5 associée au décodage inverse de la matrice d'émission re-combinée. Cette matrice est la matrice transposée conjuguée de la matrice de Fourier 10x10 d'émission.

Lors d'une étape référencée 6, on effectue alors un décodage à maximum de vraisemblance, ou un décodage moins complexe du type décodage par sphère, ou décodage par décomposition QR. Avec un décodage à maximum de vraisemblance, si M correspond à l'alphabet de la modulation, il faudra faire une recherche exhaustive du signal émis en faisant $M^{10}$ comparaisons.

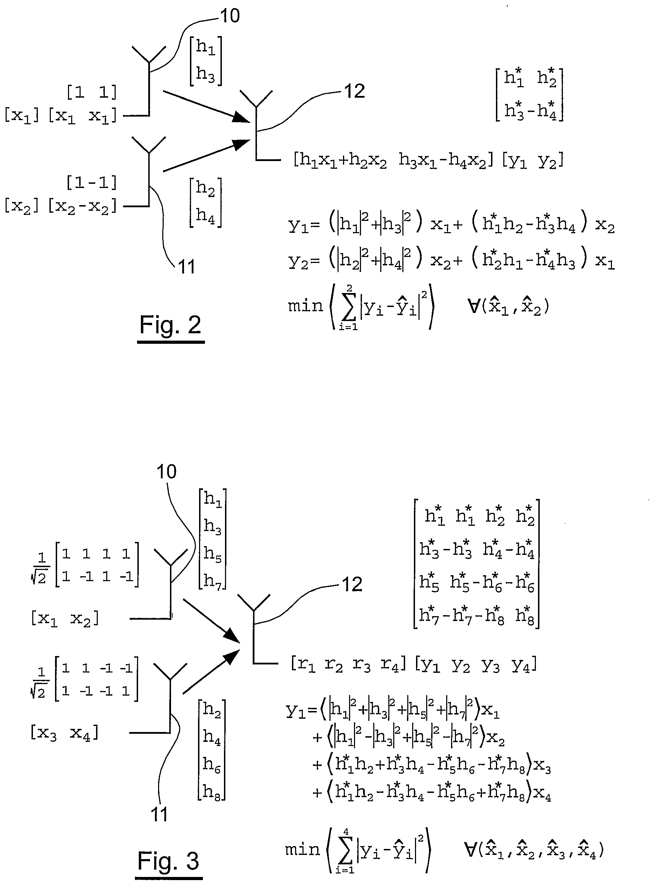

On présente désormais, en relation avec la figure 2, un mode de réalisation de l'invention dans le cas d'un système d'émission à deux antennes 10, 11, dans lequel on utilise des codes espace-temps de matrice 2x2.

Cette figure 2 illustre le système d'émission de l'invention avec des séquences de code d'Hadamard par antenne de longueur 2. Ce code a un rendement de codage de 1/2 ou un rendement de code espace-temps de 1 si on considère le rendement R égal au nombre de symboles N sur le nombre de temps symboles L pendant lesquels ils sont émis.

Sur la figure 2, $x_1$, $x_2$ représentent les symboles à transmettre. $h_1$, $h_2$, $h_3$, $h_4$ sont par exemple des canaux de propagation plats de Rayleigh, associés aux deux antennes d'émission 10, 11. $y_1$ et $y_2$ sont les symboles égalisés récupérés lors de l'étape référencée 5 de la figure 1.

Après multiplication du sous-vecteur $[x_1]$ par la sous-matrice $[1\ 1]$ associée à l'antenne d'émission 10, cette dernière émet le sous-vecteur $[x_1\ x_1]$. De même, l'antenne d'émission 11 émet le sous-vecteur $[x_2\ \text{-}x_2]$, obtenu par multiplication de $[x_2]$ par la sous-matrice $[1\ \text{-}1]$.

En considérant un entrelacement adapté et une décorrélation entre les antennes, le canal varie tous les temps symboles. A la réception, on reçoit sur l'antenne de réception 12 la contribution de la première antenne 10 ainsi que de la deuxième antenne 11 affectée par le canal correspondant, qui s'écrit sous forme matricielle $[h_1x_1 + h_2x_2\ h_3x_1 - h_4x_2]$. Une étape de décodage et d'égalisation consiste ensuite à appliquer la matrice

$$\begin{bmatrix} h_1^* & h_2^* \\ h_3^* & -h_4^* \end{bmatrix}$$

transconjuguée de la matrice unitaire d'émission, tout en effectuant une égalisation. On considère par conséquent les différents canaux ayant contribué à l'étape de transmission. Un décodage ML (ou à Maximum de Vraisemblance) peut ensuite être effectué, qui va rechercher le mot qui a été le plus probablement envoyé. Pour ce faire, on calcule la métrique

$$\min\left( \sum_{i=1}^{2} \left| y_i - \hat{y}_i \right|^2 \right)$$

présentée sur la figure 2 pour tous les vecteurs $(\hat{x}_1, \hat{x}_2)$ possibles, afin de déterminer le mot de code émis le plus probable.

La figure 3 présente un système d'émission à deux antennes 10, 11 similaire à celui de la figure 2, dans lequel on utilise des codes espace-temps à matrice 4x4.

Dans le système de la figure 3, on utilise plus précisément des séquences de code d'Hadamard par antenne de longueur 4. On peut imaginer augmenter la taille des matrices d'Hadamard et ainsi obtenir des codes de longueur L pour deux antennes.

A nouveau, $x_1$, $x_2$, $x_3$, $x_4$ sont les symboles à transmettre. $h_1$, $h_2$, $h_3$, $h_4$, $h_5$, $h_6$, $h_7$, $h_8$ sont les canaux de propagation plats de Rayleigh associés aux deux antennes d'émission 10, 11, les indices impairs se référant à la première antenne d'émission 10, et les indices pairs à la seconde antenne 11. $y_1$, $y_2$, $y_3$, $y_4$ sont les symboles égalisés récupérés sur l'antenne de réception 12 à l'issue de l'étape 5 de la figure 1.

L'antenne d'émission 10 émet le sous-vecteur obtenu par multiplication du sous-vecteur $[x_1\ x_2]$ par la sous-matrice $\frac{1}{\sqrt{2}}\begin{bmatrix} 1 & 1 & 1 & 1 \\ 1 & -1 & 1 & -1 \end{bmatrix}$. De même, l'antenne d'émission 11 émet le sous-vecteur, obtenu par multiplication de $[x_3\ x_4]$ par la sous-matrice $\frac{1}{\sqrt{2}}\begin{bmatrix} 1 & 1 & -1 & -1 \\ 1 & -1 & -1 & 1 \end{bmatrix}$.

A la réception, on reçoit sur l'antenne de réception 12 la contribution de la première antenne 10 ainsi que de la deuxième antenne 11 affectée par le canal correspondant ($[r_1\ r_2\ r_3\ r_4]$). Une étape de décodage et d'égalisation du signal reçu consiste ensuite à appliquer la matrice $\begin{bmatrix} h_1^* & h_1^* & h_2^* & h_2^* \\ h_3^* & -h_3^* & h_4^* & -h_4^* \\ h_5^* & h_5^* & -h_6^* & -h_6^* \\ h_7^* & -h_7^* & -h_8^* & h_8^* \end{bmatrix}$ transconjuguée de la matrice unitaire d'émission, tout en effectuant une égalisation.

On calcule ensuite la métrique $\min\left(\sum_{i=1}^{4}|y_i - \hat{y}_i|^2\right)$ présentée sur la figure 3 pour tous les vecteurs $(\hat{x}_1, \hat{x}_2, \hat{x}_3, \hat{x}_4)$ possibles afin d'avoir le mot de code émis le plus probable.

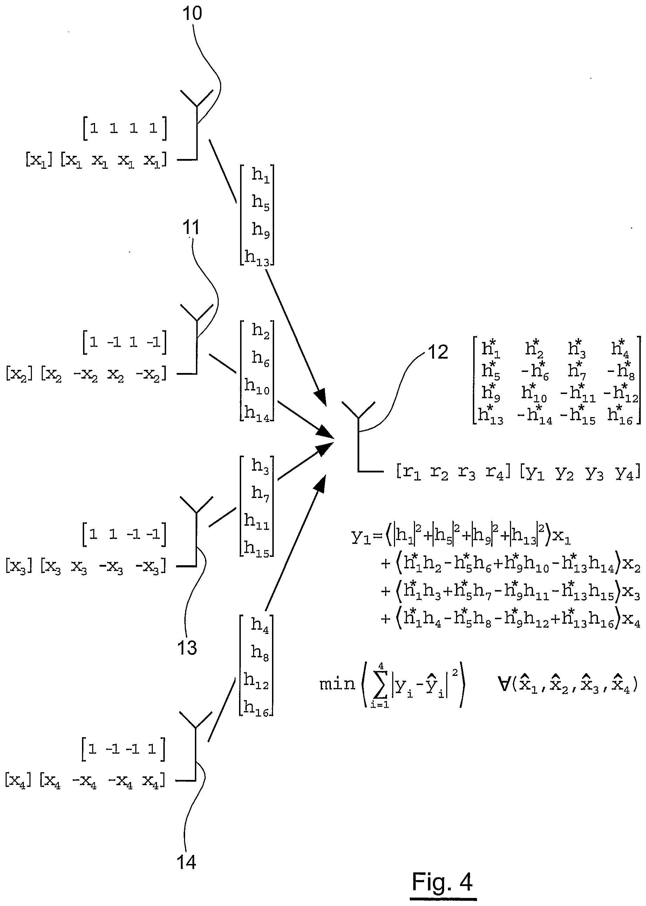

Le système de l'invention n'est pas limité en termes de nombre d'antennes d'émission. Ainsi qu'illustré sur la figure 4, il est possible de créer des codes espace-temps à 4 antennes d'émission 10, 11, 13 et 14 avec une taille de matrice minimum L=4.

Sur la figure 4, $x_1$, $x_2$, $x_3$, $x_4$ sont les symboles à transmettre. $h_1$, $h_2$, $h_3$, $h_4$, $h_5$, $h_6$, $h_7$, $h_8$, $h_9$, $h_{10}$, $h_{11}$, $h_{12}$, $h_{13}$, $h_{14}$, $h_{15}$, $h_{16}$ sont les canaux de propagation plats de Rayleigh, associés à chacune des quatre antennes 10, 11, 13 et 14 ainsi qu'illustré sur la figure 4. $y_1$, $y_2$, $y_3$, $y_4$ sont les symboles égalisés après réception par l'antenne de réception 12. On calcule ensuite la métrique $\min\left(\sum_{i=1}^{4}|y_i - \hat{y}_i|^2\right)$ illustrée en figure 4 pour tous les vecteurs $(\hat{x}_1, \hat{x}_2, \hat{x}_3, \hat{x}_4)$ possibles, afin de déterminer le mot de code émis le plus probable.

Le principe d'émission des sous-vecteurs par chacune des antennes d'émission est similaire à celui présenté précédemment en relation avec les figures 10, 11, 13 et 14 et, par souci de simplification, ne sera donc pas décrit ici plus en détail.

On notera que, dans les exemples illustrés précédemment en relation avec les figures 2 à 4, les codes espace-temps considérés ont été créés en utilisant de simples matrices d'Hadamard. Il est cependant possible d'utiliser toute matrice unitaire, Hadamard complexe ou Fourier. Plus généralement, toute matrice unitaire peut être utilisée dans le système d'émission de l'invention.

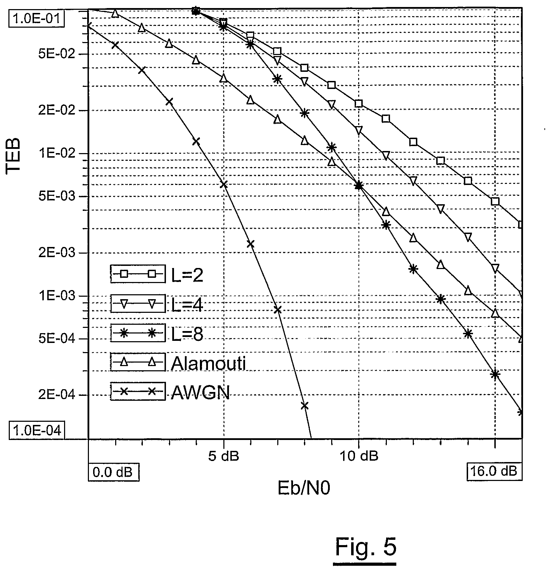

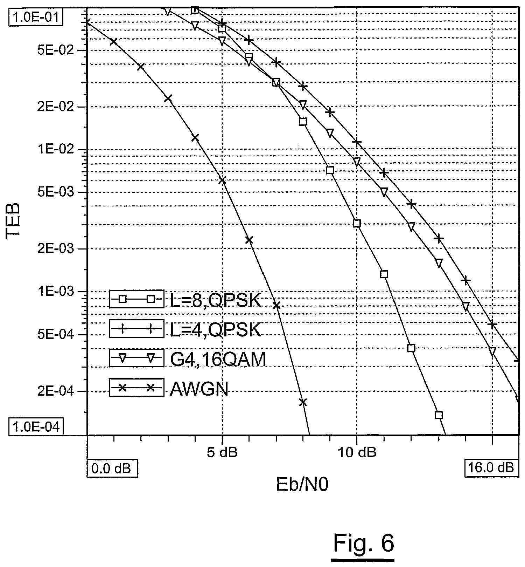

On présente désormais, en relation avec les figures 5 et 6, les performances obtenues, selon l'invention, en effectuant le décodage des codes espace-temps avec un décodeur ML (ou à Maximum de Vraisemblance).

La figure 5 illustre les performances comparées de différents codes espace-temps à rendement de 1 pour 2 antennes d'émission et une antenne de réception, dans le cadre d'une modulation QPSK. Plus précisément, la figure 5 présente les performances des codes espace-temps de l'invention pour une taille de matrice de codage L=2, L=4 et L=8, ainsi que celles du code d'Alamouti.

Comme le montre la figure 5, les performances des codes de l'invention sont bonnes à fort rapport signal sur bruit, lorsque la taille de matrice de codage L augmente. En effet, pour 2 antennes d'émission et 1 antenne de réception, lorsqu'on prend une matrice de codage L=8, les performances des codes de l'invention dépassent les performances de la courbe de référence du codage d'Alamouti ("A Simple Transmit Diversity Technique for Wireless Communications", IEEE J. Sel. Areas Comm., 1998, 16, (8), pp. 1451-1458) pour un rapport Eb/N0>10 dB.

Plus précisément, on peut se rendre compte que, plus la taille de la matrice des codes augmente, plus les symboles sont détectés avec un ordre de diversité de canal important. Cela se traduit par la pente des courbes de performances de la figure 5 : plus la pente est accentuée et plus l'ordre de diversité de canal augmente, pour atteindre asymptotiquement une loi gaussienne, illustrée par la courbe AWGN de la figure 5.

Ces résultats montrent que des décodages moins complexes que le décodage à maximum de vraisemblance peuvent être mis en oeuvre selon l'invention, tout en conservant des performances satisfaisantes par rapport aux techniques de l'art antérieur.

On peut ainsi faire appel à un décodage QR correspondant à un DFE (en anglais "Digital Feedback Equalizer" ou "égaliseur numérique à retour de décision") ou utiliser un décodage de Viterbi. Une autre solution peut-être d'utiliser un "Annulateur d'interférence". En effet, si M est la taille de l'alphabet et que L est la taille de la matrice des codes, un décodeur à maximum de vraisemblance doit exhaustivement comparer $M^L$ mots de codes, ce qui est particulièrement complexe à implémenter.

La figure 6 illustre les performances comparées de différents codes espace-temps à rendement de 1 pour 4 antennes d'émission et une antenne de réception, dans le cadre d'une modulation QPSK. Plus précisément, la figure 6 présente les performances des codes espace-temps de l'invention pour une taille de matrice de codage L=4 et L=8 et une modulation de type QPSK, ainsi que celles du code G4 de Tarokh pour une modulation 16QAM. La courbe AWGN de la figure 6 représente une loi gaussienne associée à un bruit blanc.

La différence entre le code espace-temps de l'invention avec L=4 et le code G4 de Tarokh ("Space-time block codes from orthogonal designs", IEEE Trans. on Information Theory, 1999, 45, (5), pp. 1456-1467) utilisant une modulation de type 16 QAM ("Quadrature amplitude Modulation", en français "modulation d'amplitude en quadrature") est faible et on peut prévoir un gain assez conséquent lorsque L va augmenter. On voit ainsi un gain assez important quand L=8. Les deux courbes sont parallèles car ces deux codes obtiennent le même ordre de diversité qui est de 4. La différence vient d'une interférence un peu plus grande dans le cas du code de l'invention pour L=4. Cependant, pour L=8 et plus, on peut d'ores et déjà dire que les performances des codes de l'invention seront meilleures que celles du code G4 de Tarokh.

On rappelle que la technique de l'invention peut s'appliquer à tout système multi-antennes, qu'il soit de type MIMO ou de type MISO. Les modulations de type OFDM et les systèmes MC-CDMA sont particulièrement bien adaptés au système proposé par l'invention.

## Revendications

1.    Procédé d'émission d'un signal formé de vecteurs successifs comprenant chacun N symboles à émettre, N un nombre entier, et mettant en oeuvre une pluralité Nt d'antennes d'émission, **caractérisé en ce qu'**on associe à chacune desdites antennes une sous-matrice distincte, chaque sous-matrice étant obtenue par découpage d'une matrice carrée unitaire, et **en ce que** chacune desdites antennes émet des sous-vecteurs découpés distincts ayant une taille de N/Nt obtenus par découpage desdits vecteurs, multipliés respectivement par lesdites sous-matrices, ladite matrice carrée unitaire ayant une taille de (N,N) et chacune desdites sous-matrices ayant une taille de (N/Nt,N) où N est supérieur ou égal à Nt, et N/Nt est un nombre entier, où ladite matrice carrée unitaire est pleine.

2.    Procédé d'émission selon la revendication 1, **caractérisé en ce que** N/Nt est supérieur ou égal à 2.

3.    Procédé d'émission selon l'une quelconque des revendications 1 à 2, **caractérisé en ce que** ladite matrice carrée unitaire appartient au groupe comprenant :

      - des matrices réelles d'Hadamard ;
      - des matrices complexes d'Hadamard ;
      - des matrices de Fourier ;
      - des matrices de rotation réelles ;
      - des matrices de rotation complexes.

4.    Procédé d'émission selon l'une quelconque des revendications 1 à 3, **caractérisé en ce qu'**il met en oeuvre deux antennes d'émission, et **en ce que** lesdites sous-matrices valent [1 1] et [1 -1].

5.    Procédé d'émission selon l'une quelconque des revendications 1 à 3, **caractérisé en ce qu'**il met en oeuvre deux antennes d'émission, et **en ce que** lesdites sous-matrices valent $\dfrac{1}{\sqrt{2}}\begin{bmatrix} 1 & 1 & 1 & 1 \\ 1 & -1 & 1 & -1 \end{bmatrix}$ et $\dfrac{1}{\sqrt{2}}\begin{bmatrix} 1 & 1 & -1 & -1 \\ 1 & -1 & -1 & 1 \end{bmatrix}$.

6.    Procédé d'émission selon l'une quelconque des revendications 1 à 3, **caractérisé en ce qu'**il met en oeuvre quatre antennes d'émission, et **en ce que** lesdites sous-matrices valent [1 1 1 1], [1 -1 1 -1], [1 1 -1 -1] et [1 -1 -1 1].

7.    Procédé de réception d'un signal mettant en oeuvre au moins une antenne de réception, **caractérisé en ce qu'**il reçoit un signal combiné unique sur chacune desdites antennes de réception, ledit signal combiné résultant d'une émission mettant en oeuvre une pluralité Nt d'antennes d'émission, et associant à chacune desdites antennes d'émission une sous-matrice distincte, chaque sous-matrice étant obtenue par découpage d'une matrice carrée unitaire, chacune desdites antennes d'émission émettant des sous-vecteurs découpés distincts ayant une taille de N/Nt obtenus par découpage de vecteurs successifs comprenant chacun N symboles à émettre, N entier, multipliés respectivement par lesdites sous-matrices, ladite matrice carrée unitaire ayant une taille de (N,N) et chacune desdites sous-matrices ayant une taille de (N/Nt,N) où N est supérieur ou égal à Nt, et N/Nt est un nombre entier, où ladite matrice carrée unitaire est pleine, et **en ce qu'**il décode ledit signal combiné unique à l'aide d'une matrice de décodage correspondant à une matrice transposée conjuguée de ladite matrice carrée unitaire.

**8.** Procédé de réception selon la revendication 7, **caractérisé en ce qu'**on applique un décodage à maximum de vraisemblance aux données issues de la multiplication par ladite matrice transposée conjuguée.

**9.** Signal **caractérisé en ce qu'**il est obtenu à partir d'une pluralité Nt d'antennes d'émission, en associant à chacune desdites antennes d'émission une sous-matrice distincte, chaque sous-matrice étant obtenue par découpage d'une matrice carrée unitaire, chacune desdites antennes d'émission émettant des sous-vecteurs découpés distincts ayant une taille de N/Nt obtenus par découpage de vecteurs successifs comprenant chacun N symboles à émettre, N entier, multipliés respectivement par lesdites sous-matrices, ladite matrice carrée unitaire ayant une taille de (N,N) et chacune desdites sous-matrices ayant une taille de (N/Nt,N) où N est supérieur ou égal à Nt, et N/Nt est un nombre entier, où ladite matrice carrée unitaire est pleine, et **en ce qu'**il correspond à la combinaison des contributions de chacune desdites antennes d'émission.

**10.** Système d'émission d'un signal formé de vecteurs successifs comprenant chacun N symboles à émettre, N un nombre entier, ledit système d'émission comprenant une pluralité Nt d'antennes d'émission, **caractérisé en ce qu'**il comprend des moyens d'association, à chacune desdites antennes, d'une sous-matrice distincte, chaque sous-matrice étant obtenue par découpage d'une matrice carrée unitaire, et **en ce que** chacune desdites antennes d'émission est apte à émettre des sous-vecteurs découpés distincts ayant une taille de N/Nt obtenus par découpage desdits vecteurs, multipliés respectivement par lesdites sous-matrices, ladite matrice carrée unitaire ayant une taille de (N,N) et chacune desdites sous-matrices ayant une taille de (N/Nt,N) où N est supérieur ou égal à Nt, et N/Nt est un nombre entier, où ladite matrice carrée unitaire est pleine.

**11.** Récepteur comprenant au moins une antenne de réception, **caractérisé en ce qu'**il est apte à recevoir un signal combiné unique sur chacune desdites antennes de réception, ledit signal combiné résultant de l'émission mettant en oeuvre une pluralité Nt d'antennes d'émission, et associant à chacune desdites antennes d'émission une sous-matrice distincte, chaque sous-matrice étant obtenue par découpage d'une matrice carrée unitaire, chacune desdites antennes d'émission émettant des sous-vecteurs découpés distincts ayant une taille de N/Nt obtenus par découpage de vecteurs successifs comprenant chacun N symboles à émettre, N entier, multipliés respectivement par lesdites sous-matrices, ladite matrice carrée unitaire ayant une taille de (N,N) et chacune desdites sous-matrices ayant une taille de (N/Nt,N) où N est supérieur ou égal à Nt, et N/Nt est un nombre entier, où ladite matrice carrée unitaire est pleine, et **en ce qu'**il comprend des moyens de décodage dudit signal combiné unique à l'aide d'une matrice de décodage correspondant à une matrice transposée conjuguée de ladite matrice carrée unitaire.

**Patentansprüche**

**1.** Sendeverfahren für ein von aufeinander folgenden Vektoren geformtes Signal, von denen jeder N auszugebende Symbole umfasst, wobei N eine ganze Zahl ist und eine Vielzahl von Nt Sendeantennen implementiert werden, **dadurch gekennzeichnet, dass** mit jeder der Antennen eine unterschiedliche Untermatrix verbindet wird, wobei jede Untermatrix durch Ausschneiden einer einzelnen quadratischen Matrix erhält wird, und wobei jede der Antennen unterschiedliche ausgeschnittene Untervektoren ausgibt, deren Größe N/Nt beträgt und die durch Ausschneiden der Vektoren erhalten werden, jeweils mit den Untermatrizen multipliziert werden, wobei die Größe der einzelnen quadratischen Matrix (N,N) ist und jede der Untermatrizen eine Größe (N/Nt,N) hat, wobei N größer oder gleich Nt ist und N/Nt eine ganze Zahl ist, wobei die einzelne quadratische Matrix ausgefüllt ist.

**2.** Sendeverfahren nach Anspruch 1, **dadurch gekennzeichnet, dass** N/Nt größer oder gleich 2 ist.

**3.** Sendeverfahren nach einem beliebigen der Ansprüche 1 bis 2, **dadurch gekennzeichnet, dass** die einzelne quadratische Matrix zu einer Gruppe gehört, die Folgendes umfasst:

- reelle Hadamard-Matrizen;
- komplexe Hadamard-Matrizen;
- Fourrier-Matrizen;
- reelle Rotations-Matrizen;
- komplexe Rotations-Matrizen;

**4.** Sendeverfahren nach einem beliebigen der Ansprüche 1 bis 3, **dadurch gekennzeichnet, dass** es zwei Emissionsantennen implementiert und dass die Untermatrizen folgende Werte haben: [1 1] und [1 -1].

**5.** Sendeverfahren nach einem beliebigen der Ansprüche 1 bis 3, **dadurch gekennzeichnet, dass** es zwei Emissionsantennen implementiert und dass die Untermatrizen folgende Werte haben:

$$\frac{1}{\sqrt{2}}\begin{vmatrix}1 & 1 & 1 & 1\\ 1 & -1 & 1 & -1\end{vmatrix} \text{ und } \frac{1}{\sqrt{2}}\begin{vmatrix}1 & 1 & -1 & -1\\ 1 & -1 & -1 & 1\end{vmatrix}.$$

6. Sendeverfahren nach einem beliebigen der Ansprüche 1 bis 3, **dadurch gekennzeichnet, dass** es vier Emissionsantennen implementiert und dass die Untermatrizen folgende Werte haben: [1 1 1 1], [1 -1 1 -1], [1 1 -1 -1] und [1 -1 -1 1].

7. Empfangsverfahren für ein Signal, das mindestens eine Empfangsantenne implementiert, **dadurch gekennzeichnet, dass** es an jeder der Empfangsantennen ein einziges kombiniertes Signal empfängt, wobei das kombinierte Signal durch ein Senden entsteht, wozu eine Vielzahl von Nt Sendeantennen implementiert wird und wobei mit jeder der Sendeantennen eine unterschiedliche Untermatrix verbindet wird, wobei jede Untermatrix durch Ausschneiden einer einzelnen quadratischen Matrix erhält wird, und wobei jede der Sendeantennen unterschiedliche ausgeschnittene Untervektoren ausgibt, deren Größe N/Nt beträgt und die durch Ausschneiden der sukzessiven Vektoren erhalten werden, wobei jeder N zu sendende Symbole enthält, wobei N eine ganze Zahl ist, und die jeweils mit den Untermatrizen multipliziert werden, wobei die Größe der einzelnen quadratischen Matrix (N,N) ist und jede der Untermatrizen eine Größe (N/Nt,N) hat, wobei N größer oder gleich Nt ist und N/Nt eine ganze Zahl ist, wobei die einzelne quadratische Matrix ausgefüllt ist, und dadurch, dass es das eindeutige kombinierte Signal mit Hilfe einer Dekodiermatrix dekodiert, die einer umgesetzten, konjugierten Matrix der einzelnen quadratischen Matrix entspricht.

8. Empfangsverfahren nach Anspruch 7, **dadurch gekennzeichnet, dass** eine Dekodierung mit maximaler Wahrscheinlichkeit für die Daten aus der Multiplizierung der umgesetzten, konjugierten Matrix angewandt wird.

9. **Dadurch gekennzeichnete**s Signal, dass es von einer Vielzahl von Nt Sendeantennen aus empfangen wird, durch Verbinden jeder dieser Sendeantennen mit einer separaten Untermatrix,, wobei jede Untermatrix durch Ausschneiden einer einzelnen quadratischen Matrix erhält wird, und wobei jede der Sendeantennen unterschiedliche ausgeschnittene Untervektoren ausgibt, deren Größe N/Nt beträgt und die durch Ausschneiden der sukzessiven Vektoren erhalten werden, wobei jeder N zu sendende Symbole enthält, wobei N eine ganze Zahl ist, und die jeweils mit den Untermatrizen multipliziert werden, wobei die Größe der einzelnen quadratischen Matrix (N,N) ist und jede der Untermatrizen eine Größe (N/Nt,N) hat, wobei N größer oder gleich Nt ist und N/Nt eine ganze Zahl ist, wobei die einzelne quadratische Matrix ausgefüllt ist, und dadurch, dass es der Kombination der Beiträge jeder der Sendeantennen entspricht.

10. Sendesystem für ein von aufeinander folgenden Vektoren geformtes Signal, von denen jeder N auszugebende Symbole umfasst, wobei N eine ganze Zahl ist, wobei das Sendesystem eine Vielzahl von Nt Sendeantennen umfasst, **dadurch gekennzeichnet, dass** es Verbindungsmittel für jede der Antennen mit einer separaten Untermatrix beinhaltet, wobei jede Untermatrix durch Ausschneiden einer einzelnen quadratischen Matrix erhält wird, und wobei jede der Sendeantennen unterschiedliche ausgeschnittene Untervektoren ausgibt, deren Größe N/Nt beträgt und die durch Ausschneiden der Vektoren erhalten werden, jeweils mit den Untermatrizen multipliziert werden, wobei die Größe der einzelnen quadratischen Matrix (N,N) ist und jede der Untermatrizen eine Größe (N/Nt,N) hat, wobei N größer oder gleich Nt ist und N/Nt eine ganze Zahl ist, wobei die einzelne quadratische Matrix ausgefüllt ist.

11. Empfänger mit mindestens eine Empfangsantenne, **dadurch gekennzeichnet, dass** er an jeder der Empfangsantennen ein einziges kombiniertes Signal empfangen kann, wobei das kombinierte Signal, das durch ein Senden entsteht, wozu eine Vielzahl von Nt Sendeantennen implementiert wird und wobei mit jeder der Sendeantennen eine unterschiedliche Untermatrix verbindet wird, wobei jede Untermatrix durch Ausschneiden einer einzelnen quadratischen Matrix erhält wird, und wobei jede der Sendeantennen unterschiedliche ausgeschnittene Untervektoren ausgibt, deren Größe N/Nt beträgt und die durch Ausschneiden der sukzessiven Vektoren erhalten werden, wobei jeder N zu sendende Symbole enthält, wobei N eine ganze Zahl ist, und die jeweils mit den Untermatrizen multipliziert werden, wobei die Größe der einzelnen quadratischen Matrix (N,N) ist und jede der Untermatrizen eine Größe (N/Nt,N) hat, wobei N größer oder gleich Nt ist und N/Nt eine ganze Zahl ist, wobei die einzelne quadratische Matrix ausgefüllt ist, und dadurch, dass er Mittel zur Dekodierung des kombinierten eindeutigen Signals mit Hilfe einer Dekodiermatrix besitzt, die einer umgesetzten, konjugierten Matrix der einzelnen quadratischen Matrix entspricht.

## Claims

1. A method of emitting a signal formed by successive vectors each comprising N symbols to be emitted, N being an integer, and implementing a plurality Nt of emitting antennas,

**characterised in that** a distinct submatrix is associated with each of said antennas, each submatrix being obtained by cutting a unit square matrix, and **in that** each of said antennas emits distinct cut subvectors having a size of N/Nt obtained by cutting said vectors, respectively multiplied by said submatrices, said unit square matrix having a size (N,N) and each of said submatrices having a size (N/Nt,N) where N is higher than or equal to Nt, and N/Nt is an integer, where said unit square matrix is full.

2. The emitting method according to claim 1, **characterised in that** N/Nt is higher than or equal to 2.

3. The emitting method according to any of claims 1 and 2, **characterised in that** said unit square matrix belongs to the group comprising:

   - real Hadamard matrices;
   - complex Hadamard matrices;
   - Fourier matrices;
   - real rotation matrices;
   - complex rotation matrices.

4. The emitting method according to any of claims 1 to 3, **characterised in that** it implements two emitting antennas, and **in that** said submatrices are [1 1] and [1 - 1] .

5. The emitting method according to any of claims 1 to 3, **characterised in that** it implements two emitting antennas, and **in that** said submatrices are

$$\frac{1}{\sqrt{2}}\begin{vmatrix} 1 & 1 & 1 & 1 \\ 1 & -1 & 1 & -1 \end{vmatrix} \quad \text{and}$$

$$\frac{1}{\sqrt{2}}\begin{vmatrix} 1 & 1 & -1 & -1 \\ 1 & -1 & -1 & 1 \end{vmatrix}.$$

6. The emitting method according to any of claims 1 to 3, **characterised in that** it implements four emitting antennas, and **in that** said submatrices are [1 1 1 1], [1-1 1-1], [1 1-1-1] and [1-1-1 1].

7. A method of receiving a signal implementing at least one receiving antenna,

   **characterised in that** it receives a single combined signal on each of said receiving antennas, said combined signal resulting from an emission implementing a plurality Nt of emitting antennas, and associating a distinct submatrix with each of said emitting antennas, each submatrix being obtained by cutting a unit square matrix, each of said emitting antennas emitting distinct cut subvectors having a size of N/Nt obtained by cutting successive vectors each comprising N symbols to be emitted, N being an integer, which vectors are respectively multiplied by said submatrices, said unit square matrix having a size (N, N) and each of said submatrices having a size (N/Nt, N) where N is higher than or equal to Nt, and N/Nt is an integer, where said unit square matrix is full,

   and **in that** it decodes said single combined signal using a decoding matrix corresponding to the conjugate transpose matrix of said unit square matrix.

8. The receiving method according to claim 7, **characterised in that** a maximum likelihood decoding is applied to the data from the multiplication by said conjugate transpose matrix.

9. A signal **characterised in that** it is obtained from a plurality Nt of emitting antennas, by associating a distinct submatrix with each of said emitting antennas, each submatrix being obtained by cutting a unit square matrix, each of said emitting antennas emitting distinct cut subvectors having a size N/Nt which are obtained by cutting successive vectors each comprising N symbols to be emitted, N being an integer, which vectors are respectively multiplied by said submatrices, said unit square matrix having a size (N,N) and each of said submatrices having a size (N/Nt,N) where N is higher than or equal to Nt, and N/Nt is an integer, where said unit square matrix is full,

   and **in that** it corresponds to the combination of the contributions from each of said emitting antennas.

10. A system of emitting a signal formed by successive vectors each comprising N symbols to be emitted, N being an integer,

   said emitting system comprising a plurality Nt of emitting antennas,
   **characterised in that** it comprises means for associating, with each of said antennas, a distinct submatrix, each submatrix being obtained by cutting a unit square matrix, and **in that** each of said emitting antennas is able to implement distinct cut subvectors having a size of N/Nt which are obtained by cutting said vectors, respectively multiplied by said submatrices, said unit square matrix having a size (N,N) and each of said submatrices having a size (N/Nt,N) where N is higher than or equal to Nt, and N/Nt is an integer, where said unit square matrix is full.

11. A receiver comprising at least one receiving antenna,

**characterised in that** it is able to receive a single combined signal on each of said receiving antennas, said combined signal resulting from the emission implementing a plurality Nt of emitting antennas, and associating a distinct submatrix with each of said emitting antennas, each submatrix being obtained by cutting a unit square matrix, each of said emitting antennas emitting distinct cut subvectors having a size of N/Nt obtained by cutting successive vectors each comprising N symbols to be emitted, N being an integer, which vectors are respectively multiplied by said submatrices, said unit square matrix having a size (N,N) and each of said submatrices having a size (N/Nt,N) where N is higher than or equal to Nt, and N/Nt is an integer, where said unit square matrix is full,

and **in that** it comprises means for decoding said single combined signal using a decoding matrix corresponding to a conjugate transpose matrix of said unit square matrix.

1 — CONSTRUCTION de Nt SOUS-VECTEURS de TAILLE N/Nt à partir du VECTEUR X.

2 — MULTIPLICATION de chacun des Nt SOUS-VECTEURS par une SOUS-MATRICE de taille (N/Nt)xN OBTENUE à partir d'une MATRICE PRINCIPALE de taille NxN

3 — ÉMISSION de CHACUN des SOUS-VECTEURS CODÉS SUR CHACUNE des Nt ANTENNES.

7 — CANAL de TRANSMISSION de chaque ANTENNE

4 — RÉCEPTION, PAR CHAQUE ANTENNE DE RÉCEPTION, D'UN SIGNAL CORRESPONDANT À LA SOMME DES DIFFÉRENTS SIGNAUX ÉMIS PAR CHAQUE ANTENNE D'ÉMISSION AFFECTÉS PAR LEUR CANAL DE TRANSMISSION

5 — ÉGALISATION ASSOCIÉE AU DÉCODAGE INVERSE DE LA MATRICE D'ÉMISSION RECOMBINÉE

6 — DÉCODAGE À MAXIMUN DE VRAISEMBLANCE

Fig. 1

$$\begin{bmatrix} h_1 \\ h_3 \end{bmatrix}$$

$$\begin{bmatrix} h_1^* & h_2^* \\ h_3^* & -h_4^* \end{bmatrix}$$

$[1\ 1]$
$[x_1]\ [x_1\ x_1]$ — 10

12

$[1\ -1]$
$[x_2]\ [x_2\ -x_2]$

$$\begin{bmatrix} h_2 \\ h_4 \end{bmatrix}$$

$[h_1x_1+h_2x_2 \quad h_3x_1-h_4x_2]\ [y_1\ y_2]$

11

$y_1 = \left(|h_1|^2+|h_3|^2\right)x_1 + \left(h_1^*h_2-h_3^*h_4\right)x_2$

$y_2 = \left(|h_2|^2+|h_4|^2\right)x_2 + \left(h_2^*h_1-h_4^*h_3\right)x_1$

$\min\left(\sum_{i=1}^{2}|y_i-\hat{y}_i|^2\right) \quad \forall(\hat{x}_1,\hat{x}_2)$

**Fig. 2**

---

$$\begin{bmatrix} h_1 \\ h_3 \\ h_5 \\ h_7 \end{bmatrix}$$

$$\begin{bmatrix} h_1^* & h_1^* & h_2^* & h_2^* \\ h_3^* & -h_3^* & h_4^* & -h_4^* \\ h_5^* & h_5^* & -h_6^* & -h_6^* \\ h_7^* & -h_7^* & -h_8^* & h_8^* \end{bmatrix}$$

$\frac{1}{\sqrt{2}}\begin{bmatrix} 1 & 1 & 1 & 1 \\ 1 & -1 & 1 & -1 \end{bmatrix}$ — 10

12

$[x_1\ x_2]$

$\frac{1}{\sqrt{2}}\begin{bmatrix} 1 & 1 & -1 & -1 \\ 1 & -1 & -1 & 1 \end{bmatrix}$

$[x_3\ x_4]$

$$\begin{bmatrix} h_2 \\ h_4 \\ h_6 \\ h_8 \end{bmatrix}$$

11

$[r_1\ r_2\ r_3\ r_4]\ [y_1\ y_2\ y_3\ y_4]$

$y_1 = \left(|h_1|^2+|h_3|^2+|h_5|^2+|h_7|^2\right)x_1$
$\quad + \left(|h_1|^2-|h_3|^2+|h_5|^2-|h_7|^2\right)x_2$
$\quad + \left(h_1^*h_2+h_3^*h_4-h_5^*h_6-h_7^*h_8\right)x_3$
$\quad + \left(h_1^*h_2-h_3^*h_4-h_5^*h_6+h_7^*h_8\right)x_4$

$\min\left(\sum_{i=1}^{4}|y_i-\hat{y}_i|^2\right) \quad \forall(\hat{x}_1,\hat{x}_2,\hat{x}_3,\hat{x}_4)$

**Fig. 3**

$$y_1 = \left\langle \left|h_1\right|^2 + \left|h_5\right|^2 + \left|h_9\right|^2 + \left|h_{13}\right|^2 \right\rangle x_1$$
$$+ \left\langle h_1^* h_2 - h_5^* h_6 + h_9^* h_{10} - h_{13}^* h_{14} \right\rangle x_2$$
$$+ \left\langle h_1^* h_3 + h_5^* h_7 - h_9^* h_{11} - h_{13}^* h_{15} \right\rangle x_3$$
$$+ \left\langle h_1^* h_4 - h_5^* h_8 - h_9^* h_{12} + h_{13}^* h_{16} \right\rangle x_4$$

$$\min \left( \sum_{i=1}^{4} \left| y_i - \hat{y}_i \right|^2 \right) \qquad \forall (\hat{x}_1, \hat{x}_2, \hat{x}_3, \hat{x}_4)$$

Fig. 4

Fig. 5

Fig. 6

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1009124 A

- EP 1073212 A

**Littérature non-brevet citée dans la description**

- **ALAMOUTI.** A Simple Transmit Diversity Technique for Wireless Communications. *IEEE J. Sel. Areas Comm.,* 1998, vol. 16 (8), 1451-1458
- **TAROKH et al.** Space-time block codes from orthogonal designs. *IEEE Trans. on Information Theory,* 1999, vol. 45 (5), 1456-1467
- **JAFARKHANI.** A quasi-Orthogonal Space-Time Block Code. *IEEE Trans. Comm.,* 2001, vol. 49 (1), 1-4
- **TIRKONNEN et al.** Minimal non-orthogonality rate one space-time block code for 3+ Tx antennas. *ISSS-TA,* 2000, 429-432

- **DAMEN et al.** Diagonal Algebraic Space-Time Block Codes. *IEEE Trans. Inf. Theory,* 2002, vol. 48 (3), 628-626
- **XIN et al.** Time Constellation-Rotating Codes Maximizing Diversity and Coding Gains. *GLOBECOM,* 2001, 455-459
- **TAROKH.** Space-time block codes from orthogonal designs. *IEEE Trans. on Information Theory,* 1999, vol. 45 (5), 1456-1467